# EUROPÄISCHE PATENTANMELDUNG

(11) **EP 4 778 819 A1**
(43) Veröffentlichungstag der Anmeldung: **22.07.2026**
(21) Anmeldenummer: 26153039.8
(22) Anmeldetag: 20.01.2026
(51) Int. Cl.: B62M 6/45, B62M 6/55

(54) **VERFAHREN ZUM BETREIBEN EINES ELEKTROFAHRRADS**

(30) Priorität: 20.01.2025 DE 102025101817
(71) Anmelder: Robert Bosch GmbH, 70442 Stuttgart (DE)
(72) Erfinder: Manewald, Merlin Martin, 72764 Reutlingen (DE); Eberle, Sebastian, 72072 Tübingen (DE); Fleischer, Claus, 70569 Stuttgart-Vaihingen (DE); Goebel, Gregor, 72116 Moessingen (DE); Gronbach, Daniel, 70180 Stuttgart (DE); Weinmann, Matthias, 72336 Balingen (DE); Schlie, Stefan, 49134 Wallenhorst (DE)

(57) **Zusammenfassung**

Die vorliegende Erfindung betrifft ein Verfahren zum Betreiben eines Elektrofahrrads, welches eine Antriebseinheit und ein Abtriebselement und ein Hinterrad und einen mechanischen Übertragungspfad zwischen Abtriebselement und Hinterrad aufweist, umfassend die Schritte: Ermitteln eines Eingriffszeitpunkts, ab welchem ein Vortrieb des Elektrofahrrads und/oder ein Momentenaufbau im Übertragungspfad des Elektrofahrrads durch die Einleitung eines Abtriebsmoments am Abtriebselement erfolgt, und gesteuertes Erzeugen eines Vorspannmoments mittels der Antriebseinheit vor dem Eingriffszeitpunkt, zum mechanischen Vorspannen des Übertragungspfads.

## Beschreibung

### Stand der Technik

Die vorliegende Erfindung betrifft ein Verfahren zum Betreiben eines Elektrofahrrads, und ein Elektrofahrrad.

Bekannt sind Elektrofahrräder, die eine Antriebseinheit zur Erzeugung eines Motormoments zur motorischen Unterstützung einer manuellen Tretkraft eines Fahrers aufweisen. Häufig umfasst ein Antriebsstrang zwischen dem Motor und dem Hinterrad eine Vielzahl an Elementen, wie eine Fahrradkette, ein Getriebe am Motor, Freiläufe und dergleichen. Um einen Vortrieb durch das Motormoment oder ein Tretmoment des Fahrers zu bewirken, müssen Spiel und Elastizitäten sämtlicher derartiger Elemente überwunden werden. Häufig können dadurch Geräusche beim Schließen des Spiels und hohe Leerwege entstehen, welche mitunter nachteilig für den Fahreindruck sind.

### Offenbarung der Erfindung

Das erfindungsgemäße Verfahren mit den Merkmalen des Anspruchs 1 zeichnet sich demgegenüber dadurch aus, dass Spiel im Antriebsstrang und Elastizitäten im Antriebsstrang automatisch kompensiert werden können. Dadurch können eine besonders direkte Kraftübertragung und ein geräuschfreier Betrieb des Elektrofahrrads ermöglicht werden. Dies wird erfindungsgemäß erreicht durch ein Verfahren zum Betreiben eines Elektrofahrrads, wobei das Elektrofahrrad eine Antriebseinheit und ein Abtriebselement und ein Hinterrad und einen mechanischen Übertragungspfad, welcher zwischen dem Abtriebselement und dem Hinterrad vorgesehen ist, aufweist. Das Verfahren umfasst die Schritte:
- Ermitteln eines Eingriffszeitpunkts, ab welchem ein Vortrieb des Elektrofahrrads und/oder ein Momentenaufbau im Antriebsstrang des Elektrofahrrads durch die Einleitung eines Abtriebsmoments am Abtriebselement erfolgt, und
- gesteuertes Erzeugen eines Vorspannmoments mittels der Antriebseinheit vor dem Eingriffszeitpunkt, zum mechanischen Vorspannen des Übertragungspfads.

Insbesondere ist die Antriebseinheit eingerichtet, um ein Motormoment zu erzeugen, welches an das Abtriebselement übertragen werden kann. Bevorzugt kann zusätzlich ein Tretmoment an das Abtriebselement übertragen werden. Beispielsweise ist das Abtriebselement ein Kettenblatt.

Als mechanischer Übertragungspfad wird insbesondere ein Antriebsstrang oder ein Teil des Antriebstrangs des Elektrofahrrads angesehen, über welchen ein am Abtriebselement bereitgestelltes Drehmoment an das Hinterrad übertragen werden kann. Vorzugsweise umfasst der mechanische Übertragungspfad mehrere Maschinenelemente, wie beispielsweise ein Übertragungselement, welches vorzugsweise eine Fahrradkette ist, einen oder mehrere Freiläufe, ein Getriebe, und dergleichen.

Als Ermitteln des Eingriffszeitpunkts wird insbesondere ein Abschätzen, vorzugsweise durch Berechnen, des Eingriffszeitpunkts angesehen. Beispielsweise kann das Ermitteln des Eingriffszeitpunkts basierend auf mittels Sensoren erfassbaren Bewegungszuständen und/oder Bewegungsänderungen von Komponenten des Elektrofahrrads, insbesondere in Folge eines beginnenden Pedalierens durch den Fahrer, abgeschätzt werden.

Mit anderen Worten erfolgt bei dem Verfahren ein prädiktives Ermitteln eines prognostizierten Eingriffszeitpunkts, bei welchem ein Kraftschluss im Antriebsstrang erfolgt, derart, dass ein Momentenaufbau im Antriebsstrang erfolgt und/oder ein Vortrieb des Elektrofahrrads durch das Abtriebsmoment am Abtriebselement erfolgt. Dabei erfolgt bei dem Verfahren gezielt ein gesteuertes Betreiben der Antriebseinheit derart, dass ein bestimmtes Vorspannmoment zeitlich vor dem Eingriffszeitpunkt erzeugt wird, um den mechanischen Übertragungspfad mechanisch vorzuspannen. Dadurch wird sämtliches Spiel im mechanischen Übertragungspfad bezüglich einer vortriebswirksamen Drehmomentübertragung kompensiert, und die Komponenten des Übertragungspfads werden mechanisch vorgespannt, sodass beispielsweise auch Elastizitäten zumindest teilweise reduziert werden. Das heißt, beispielsweise eine durch elastische Dehnung auftretende Längung einer Fahrradkette, welche durch eine Belastung mittels eines Drehmoments auftreten kann, wird zumindest teilweise bereits vor dem tatsächlichen Eingriff kompensiert.

Das Verfahren bietet somit den Vorteil, dass Leerwege, Spiel und Elastizitäten im Antriebsstrang des Elektrofahrrads gezielt durch spezielle Betätigung der Antriebseinheit zum Erzeugen des Vorspannmoments reduziert oder kompensiert werden können, sodass zum Eingriffszeitpunkt eine unmittelbare besonders direkt vortriebswirksame Drehmomentübertragung zwischen Abtriebselement und Hinterrad möglich ist. Dadurch kann der Antrieb des Elektrofahrrads durch die Muskelkraft des Fahrers und/oder durch das Motormoment der Antriebseinheit besonders direkt mit optimalem Ansprechverhalten erfolgen. Somit kann ein besonders reaktionsfreudiger Antrieb des Elektrofahrrads bereitgestellt werden.

Die Unteransprüche haben bevorzugte Weiterbildungen der Erfindung zum Inhalt.

Bevorzugt umfasst das Elektrofahrrad einen Kurbeltrieb, welcher mit dem Abtriebselement, insbesondere über einen Fahrerfreilauf drehmomentübertragend verbindbar ist. Insbesondere umfasst der Kurbeltrieb Kurbeln, wobei der Fahrerfreilauf zwischen den Kurbeln und dem Abtriebselement angeordnet ist. Als der Eingriffszeitpunkt wird dabei ein Zeitpunkt ermittelt, ab welchem der Vortrieb des Elektrofahrrads zumindest teilweise durch ein prognostiziertes am Kurbeltrieb aufgebrachtes Tretmoment eines Fahrers des Elektrofahrrads erfolgt. Mit anderen Worten wird als der Eingriffszeitpunkt ein bestimmter Zeitpunkt ermittelt, ab welchem der Vortrieb des Elektrofahrrads zumindest teilweise durch das am Kurbeltrieb aufgebrachte Tretmoment des Fahrers des Elektrofahrrads voraussichtlich erfolgen wird. Das heißt, beim Ermitteln des Eingriffszeitpunkts wird abgeschätzt, wann der Fahrer beim manuellen Pedalieren voraussichtlich in den kraftschlüssigen Eingriff mit dem Antriebsstrang gerät. Dadurch kann das Vorspannen besonders gezielt derart erfolgen, dass die manuelle Tretbewegung des Fahrers besonders direkt für den Vortrieb genutzt werden kann, ohne dass der Fahrer beim Pedalieren zunächst Leerwege und Elastizitäten überwinden muss. Somit kann für das Tretgefühl des Fahrers ein besonders direkter und reaktionsfreudiger Antrieb des Elektrofahrrads bereitgestellt werden.

Vorzugsweise wird das Ermitteln des Eingriffszeitpunkts basierend auf einer erfassten Trittfrequenz und/oder einer erfassten Trittfrequenzänderung und/oder einem erfassten Pedalwinkel und/oder einem ermittelten Übersetzungsverhältnis durchgeführt. Vorzugsweise sind Trittfrequenz, Trittfrequenzänderung, Pedalwinkel basierend auf Sensordaten einer Sensorik des Elektrofahrrads ermittelbar. Das Übersetzungsverhältnis wird vorzugsweise von einer Schaltvorrichtung des Elektrofahrrads, insbesondere in Form eines Signals, bereitgestellt. Alternativ bevorzugt kann das Übersetzungsverhältnis berechnet werden, beispielsweise bei einem erkannten Fahrereingriff basierend auf der Trittfrequenz und einer Hinterraddrehzahl. Damit kann anhand verschiedener präzise erfassbarer oder berechenbarer Größen der Eingriffszeitpunkt zuverlässig ermittelt werden.

Bevorzugt umfasst das Verfahren ferner den Schritt: Ermitteln einer zukünftigen prognostizierten Trittfrequenz. Als Eingriffszeitpunkt wird dabei ein Zeitpunkt ermittelt, bei welchem die prognostizierte Trittfrequenz eine vorbestimmte Eingriffstrittfrequenz erreicht oder übersteigt. Vorzugsweise erfolgt das Ermitteln der prognostizierten Trittfrequenz basierend auf einem Ermitteln einer zeitlichen Änderung der momentanen erfassten Trittfrequenz. Dabei kann die prognostizierte Trittfrequenz beispielsweise basierend auf einer zukünftigen Interpolation mittels der ermittelten zeitlichen Änderung abgeschätzt werden. Als vorbestimmte Eingriffstrittfrequenz wird vorzugsweise ein vordefinierter Wert angenommen, welcher beispielsweise Null Umdrehungen pro Minute beträgt. Damit kann auf besonders einfache und zuverlässige Weise der voraussichtliche zukünftige Kraftschluss des Fahrers beim Treten abgeschätzt werden.

Weiter bevorzugt wird die Eingriffstrittfrequenz basierend auf einer erfassten Hinterraddrehzahl und dem ermittelten Übersetzungsverhältnis ermittelt. Das heißt, die Eingriffstrittfrequenz wird adaptiv basierend auf momentanen Fahrkenngrößen berechnet. Damit kann der prognostizierte Eingriffszeitpunkt besonders zuverlässig und präzise ermittelt werden.

Vorzugsweise umfasst das Verfahren ferner den Schritt: Ermitteln einer Eingriffs-Motordrehzahl beim Eingriffszeitpunkt. Vorzugsweise wird die Eingriffs-Motordrehzahl basierend auf der erfassten Hinterraddrehzahl und dem ermittelten Übersetzungsverhältnis ermittelt. Das gesteuerte Erzeugen des Vorspannmoments erfolgt dabei durch ein Betreiben der Antriebseinheit mit einer Vorspanndrehzahl, welche größer oder gleich der Eingriffs-Motordrehzahl ist. Mit anderen Worten wird diejenige Drehzahl des Motors ermittelt, bei welcher in Abhängigkeit der momentanen Fahrkenngrößen der Kraftschluss zwischen Motor und Antriebsstrang voraussichtlich erfolgen wird. Das Vorspannen des Antriebsstrangs erfolgt dabei dadurch, dass gezielt gesteuert die Antriebseinheit mittels der Vorspanndrehzahl betrieben wird, welche mindestens der abgeschätzten Eingriffs-Motordrehzahl beim Eingriffszeitpunkt entspricht. Dadurch kann beispielsweise mittels einer Drehzahlregelung besonders einfach und zuverlässig das mechanische Vorspannen des Übertragungspfads bewirkt werden.

Bevorzugt umfasst die Antriebseinheit einen Motor und ein Getriebe und einen Motorfreilauf. Das Getriebe und der Motorfreilauf sind dabei zwischen dem Motor und dem Abtriebselement angeordnet. Das gesteuerte Erzeugen des Vorspannmoments bei der Durchführung des Verfahrens erfolgt dabei mittels der Antriebseinheit derart, um zusätzlich einen Motorübertragungspfad zwischen Motor und Abtriebselement mechanisch vorzuspannen. Das heißt, das gesteuerte Betätigen der Antriebseinheit beim Vorspannen des Übertragungspfads erfolgt gezielt derart, dass zudem ein Motorübertragungspfad zwischen Motor und Abtriebselement durch den Betrieb der Antriebseinheit vorgespannt wird. Damit kann der gesamte Übertragungspfad vom Motor bis an das Hinterrad mechanisch vorgespannt werden. Somit kann bei einem bevorstehenden Motoreingriff, das heißt bei einem zukünftigen Vortrieb des Elektrofahrrads zumindest teilweise durch das Motormoment, besonders gezielt ermöglicht werden, dass zum Zeitpunkt dieses Motoreingriffs sämtliche Leerwege und Elastizitäten des gesamten Antriebsstrangs zumindest weitgehend überwunden sind, sodass der Motor besonders direkt und unmittelbar durch das Motormoment den Vortrieb des Elektrofahrrads bewirken kann. Insbesondere kann dabei ein plötzliches Überwinden von Leerwegen vermieden werden, welches ansonsten zu Geräuschen oder mechanischen Schlägen führen kann.

Besonders bevorzugt erfolgt das gesteuerte Erzeugen des Vorspannmoments derart, dass eine Beschleunigung des Elektrofahrrads und/oder eine Beschleunigung einer Hinterraddrehzahl kleiner als ein vorbestimmter Schwellwert, insbesondere gleich Null, ist. Das heißt, das erzeugte Vorspannmoment wird, vorzugsweise basierend auf einer Sensorüberwachung, derart limitiert, dass kein signifikanter Vortrieb des Elektrofahrrads erfolgt. Damit kann beispielsweise zuverlässig sichergestellt werden, dass eine effektive Motorunterstützung, welche zum Vortrieb des Elektrofahrrads beiträgt, beispielsweise nur bei gleichzeitiger Pedalbetätigung durch den Fahrer erfolgen kann.

Weiter bevorzugt erfolgt das gesteuerte Erzeugen des Vorspannmoments maximal für eine vorbestimmte Zeitspanne. Das heißt, das motorunterstützte Vorspannen des mechanischen Übertragungspfads ist zeitlich begrenzt. Die vorbestimmte Zeitspanne beträgt beispielsweise maximal 20 Sekunden, vorzugsweise maximal 10 Sekunden. Damit kann auf besonders einfache und energieeffiziente Weise das Vorspannen des Antriebsstrangs erfolgen. Beispielseise kann damit auch ermöglicht werden, dass das Vorspannen gezielt regelmäßig oder bei vorbestimmten Fahrsituationen automatisch, und beispielsweise ohne weitere Kriterien durchgeführt wird, wodurch das Vorspannen auf besonders einfache und kostengünstige Weise ermöglicht werden kann.

Weiter bevorzugt wird das Verfahren ausschließlich in vorbestimmten Fahrsituationen durchgeführt. Die vorbestimmten Fahrsituationen umfassen bevorzugt einen Wiederantritt während einer Fortbewegung des Elektrofahrrads und/oder ein Pedaltippeln. Als Wiederantritt wird insbesondere angesehen, dass während eines Rollens des Elektrofahrrads ohne dass der Fahrer das Elektrofahrrad mit Pedalkraft und insbesondere auch ohne Motormoment, fortbewegt. Ausgehend aus diesem Zustand wird ein erneuter Kraftschluss zukünftig bevorstehen. Als Pedaltippeln wird insbesondere ein periodisches Vor- und Zurückbewegen der Pedale angesehen, bei dem jeweils kurzzeitig ein Vortriebsmoment durch die Tretkraft erzeugt wird. Alternativ oder zusätzlich bevorzugt wird das Verfahren nach vorbestimmten Fahrsituationen durchgeführt. Insbesondere umfassen diese vorbestimmten Fahrsituationen einen Pedalbetrieb und/oder eine Kurvenfahrt und/oder einen Sprung und/oder eine Verzögerung des Elektrofahrrads und/oder eine Steigungsfahrt und/oder einen Schaltvorgang. Vorzugsweise können die vorbestimmten Fahrsituationen basierend auf Sensordaten, und besonders bevorzugt einer Mustererkennung anhand einer Analyse der erfassten Sensordaten, erkannt werden. Damit kann das Vorspannen des Antriebsstrangs besonders gezielt und effektiv in verschiedenen Situationen durchgeführt werden, in denen ein direkter reaktionsfreudiger Antrieb vorteilhaft ist.

Besonders bevorzugt wird das gesteuerte Erzeugen des Vorspannmoments mittels der Antriebseinheit derart durchgeführt, dass das gesteuerte Erzeugen des Vorspannmoments zumindest eine vorbestimmte Vorspann-Zeitspanne vor dem Eingriffszeitpunkt beginnt. Insbesondere entspricht die Vorspann-Zeitspanne einer erforderlichen Mindest-Zeitspanne zum mechanischen Vorspannen des Übertragungspfads. Dadurch wird ermöglicht, dass der Übertragungspfad zuverlässig und ausreichend vorgespannt ist beim Erreichen des Eingriffszeitpunkts. Vorzugsweise entspricht die Vorspann-Zeitspanne einem vorbestimmten Wert. Alternativ bevorzugt wird die Vorspann-Zeitspanne in Abhängigkeit eines momentanen Betriebspunkts variabel angepasst, beispielsweise basierend auf einer Tabelle und/oder einer Kennlinie. Weiter alternativ bevorzugt wird die Vorspann-Zeitspanne selbst-lernend ermittelt, vorzugsweise basierend auf einer erfassten Zeitdauer zwischen einem Stellen eines Motormoments und einem erfassten Lastmoment, welches höher als ein vorbestimmter Schwellwert ist.

Bevorzugt umfasst das Verfahren ferner den Schritt: Gesteuertes Erzeugen eines Bremsmoments an dem Hinterrad. Vorzugsweise erfolgt das Erzeugen des Bremsmoments zeitlich vor dem Eingriffszeitpunkt, um den Übertragungspfad mechanisch vorzuspannen. Durch ein gezieltes Bremsmoment am Hinterrad und/oder an einer Hinterradnabe, kann ein besonders effektives Vorspannen des Antriebsstrangs ermöglicht werden. Das Bremsmoment ist dabei insbesondere dem Vorspannmoment, welches mittels der Antriebseinheit erzeugt wird, entgegengerichtet. Vorteilhafterweise ist das Bremsmoment dabei vorgesehen und/oder wird derart erzeugt, um den Einfluss des Vorspannmoments am Hinterrad zu kompensieren. Dabei kann beispielsweise das von der Antriebseinheit erzeugte Vorspannmoment durch das Bremsmoment zumindest teilweise kompensiert werden, wodurch besonders zuverlässig sichergestellt werden kann, dass durch das Vorspannmoment kein Vortrieb des Elektrofahrrads bewirkt wird. Somit kann beispielsweise auch ein höheres Vorspannmoment sichergestellt, wodurch das mechanische Vorspannen besonders effektiv durchgeführt werden kann, um sämtliche Leerwege und Elastizitäten zu reduzieren.

Weiter bevorzugt erfolgt das gesteuerte Erzeugen des Bremsmoments mittels einer Bremse am Hinterrad und/oder mittels eines Nabenmotors am Hinterrad. Der Nabenmotor kann hierbei zur Erzeugung des Bremsmoments vorzugsweise generatorisch betrieben werden. Damit kann auf besonders einfache und effektive Weise das Gegenmoment für das Vorspannmoment erzeugt werden. Im Falle eines Nabenmotors kann beispielsweise in einem Vortriebsbetrieb des Elektrofahrrads gleichzeitig durch die Antriebseinheit und dem Nabenmotor ein gemeinsames Vortriebsmoment erzeugt werden.

Weiterhin führt die Erfindung zu einem Elektrofahrrad, umfassend eine Antriebseinheit, ein Abtriebselement, ein Hinterrad, einen mechanischen Übertragungspfad zwischen dem Abtriebselement und dem Hinterrad, und eine Steuereinheit. Die Steuereinheit ist insbesondere eingerichtet zur gesteuerten Betätigung der Antriebseinheit. Zudem ist die Steuereinheit eingerichtet zur Durchführung des beschriebenen Verfahrens.

### Kurze Beschreibung der Zeichnungen

Nachfolgend werden Ausführungsbeispiele der Erfindung unter Bezugnahme auf die begleitenden Zeichnungen im Detail beschrieben. In der Zeichnung ist:
- Figur 1: eine vereinfachte schematische Ansicht eines Elektrofahrrads, bei dem ein Verfahren zum Betreiben des Elektrofahrrads gemäß einem ersten Ausführungsbeispiel der Erfindung durchgeführt wird,
- Figur 2: eine stark vereinfachte schematische Ansicht eines mechanischen Übertragungspfads des Elektrofahrrads der Figur 1,
- Figur 3: eine vereinfachte schematische Ansicht eines Trittfrequenzverlaufs bei der Durchführung des Verfahrens des ersten Ausführungsbeispiels,

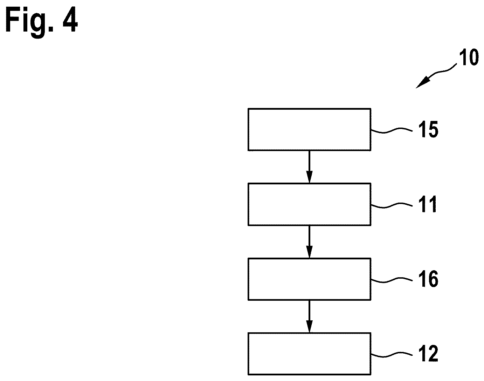

- Figur 4: eine stark vereinfachte schematische Ansicht des Verfahrens des ersten Ausführungsbeispiels,
- Figur 5: eine vereinfachte schematische Ansicht eines Elektrofahrrads, bei dem ein Verfahren zum Betreiben des Elektrofahrrads gemäß einem zweiten Ausführungsbeispiel der Erfindung durchgeführt wird,
- Figur 6: eine stark vereinfachte schematische Ansicht des Verfahrens des zweiten Ausführungsbeispiels, und
- Figur 7: eine vereinfachte schematische Ansicht eines Elektrofahrrads, bei dem ein Verfahren zum Betreiben des Elektrofahrrads gemäß einem dritten Ausführungsbeispiel der Erfindung durchgeführt wird.

### Ausführungsformen der Erfindung

Bevorzugt sind alle gleichen Bauteile, Elemente und/oder Einheiten in allen Figuren mit den gleichen Bezugszeichen versehen.

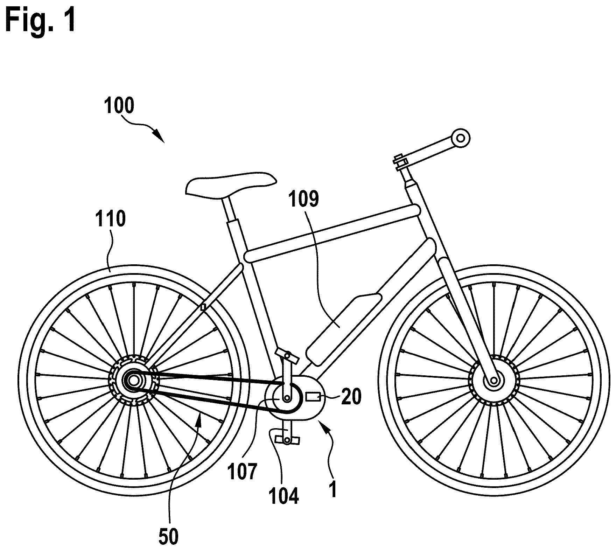

Figur 1 zeigt eine vereinfachte schematische Ansicht eines Elektrofahrrads 100, bei dem ein Verfahren 10 zum Betreiben des Elektrofahrrads 100 gemäß einem ersten Ausführungsbeispiel der Erfindung durchgeführt wird.

Das Elektrofahrrad 100 umfasst eine Antriebseinheit 1, die einen Motor aufweist, der insbesondere ein Elektromotor ist. Der Motor kann mittels eines elektrischen Energiespeichers 109 des Elektrofahrrads 100 mit elektrischer Energie versorgt werden.

Die Antriebseinheit 1 ist im Bereich eines Tretlagers des Elektrofahrrads 100 angeordnet. Durch ein mittels des Motors erzeugtes Motormoment kann eine durch Muskelkraft erzeugte Tretkraft eines Fahrers des Elektrofahrrads 100 motorisch unterstützt werden. Die Muskelkraft des Fahrers kann dabei über einen Kurbeltrieb 104 mit Kurbeln aufgebracht werden.

Die Antriebseinheit 1 umfasst ferner eine Steuereinheit 20, welche eingerichtet ist, um den Motor gesteuert zu betätigen. Beispielsweise kann die Steuereinheit 20 einen elektrischen Betätigungsstrom zum Betätigen des Motors steuern.

Die Steuereinheit 20 ist dabei eingerichtet zur Durchführung des Verfahrens 10.

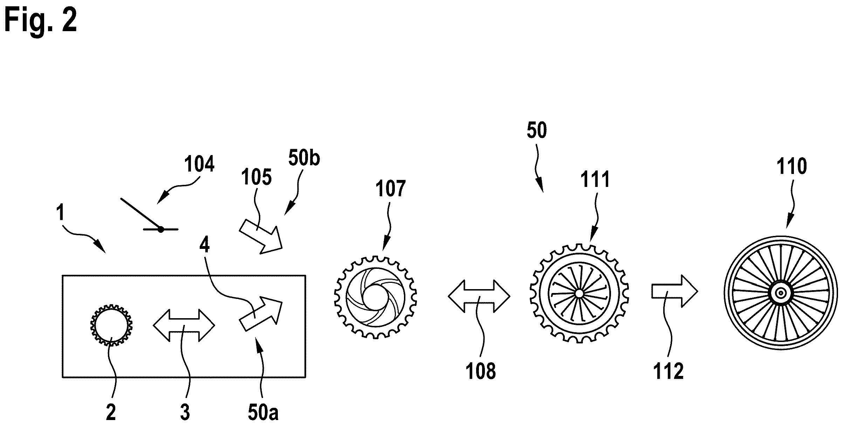

In Figur 2 ist eine stark vereinfachte schematische Ansicht eines Antriebsstrangs des Elektrofahrrads 100 dargestellt.

Das manuelle Tretmoment des Fahrers kann von dem Kurbeltrieb 104 über einen Tretmoment-Übertragungspfad 50b an ein Abtriebselement 107 des Elektrofahrrads 100 übertragen werden. Das Abtriebselement 107 ist bevorzugt ein Kettenblatt.

Der Tretmoment-Übertragungspfad 50b umfasst einen Fahrerfreilauf 105 zwischen Kurbeltrieb 104 und Abtriebselement 107. Mittels des Fahrerfreilaufs 105 kann der Fahrer vom Antriebsstrang getrennt werden, sodass Kurbeltrieb 104 und Abtriebselement 107 relativ zueinander rotieren können.

Das vom Motor 2 der Antriebseinheit 1 erzeugte Motormoment wird über einen Motorübertragungspfad 50a an das Abtriebselement 107 übertragen. Der Motorübertragungspfad 50a umfasst dabei ein Getriebe 3 und einen Motorfreilauf 4. Mittels des Motorfreilaufs 4 können Motor 2 und Abtriebselement 107 voneinander getrennt werden, sodass diese relativ zu einander rotieren können.

Ferner umfasst das Elektrofahrrad 100 einen mechanischen Übertragungspfad 50 zwischen dem Abtriebselement 107 und einem Hinterrad 110 des Elektrofahrrads 100.

Der mechanische Übertragungspfad 50 umfasst ein Übertragungselement 108, welches bevorzugt als Fahrradkette ausgebildet ist, und eine Kassette 111, welche auch als Ritzelpaket bezeichnet werden kann, und einen Hinterradfreilauf 112. Über den mechanischen Übertragungspfad 50 kann das am Abtriebselement 107 bereitgestellte Drehmoment an das Hinterrad 110 übertragen werden, um einen Vortrieb des Elektrofahrrads 100 zu bewirken.

Vorzugsweise wird als der gesamte Antriebsstrang des Elektrofahrrads 100 der mechanische Übertragungspfad 50 und der Tretmomentübertragungspfad 50b und der Motorübertragungspfad 50a angesehen.

Die Komponenten des Antriebsstrangs des Elektrofahrrads 100 weisen Leerwege, Spiel und Elastizitäten auf, welche ausgehend von einem unbelasteten Zustand zunächst überwunden werden müssen bevor in einem Eingriffszustand ein vortriebswirksames Drehmoment am Hinterrad 110 des Elektrofahrrads 100 ankommt. Das heißt, der Kurbeltrieb 104 und der Motor 2 müssen einen gewissen Betrag drehen, das heißt einen bestimmten Drehwinkel rotieren, bis der vollständige Eingriff zur Übertragung des gewünschten Drehmoments bereitgestellt wird.

Leerwege werden dabei insbesondere durch ein Getriebespiel des Getriebes 3 und durch Leerwege, beispielsweise bis zu einem Eingriff der Sperrklinken, der Freiläufe 4, 105 und 112 bewirkt. Ferner können Elastizitäten in allen Komponenten auftreten, wobei insbesondere eine Elastizität durch Längung der Fahrradkette bei Belastung im Übertragungselement 108 signifikant zum Spiel beträgt.

Das Verfahren 10 erlaubt ein Vorspannen des Antriebsstrangs des Elektrofahrrads 100 durch eine gezielte Betätigung der Antriebseinheit 1 in bestimmten Situationen. Dadurch werden die Leerwege und Elastizitäten zumindest teilweise überwunden bevor der tatsächliche Eingriff von Fahrer oder Motor 2 erfolgt. Hierdurch kann ein besonders direkter reaktionsfreudiger Antrieb des Elektrofahrrads 100 bereitgestellt werden, da die Drehmomentübertragung unmittelbar verzögerungsfrei erfolgen kann. Zudem kann ein besonders geräuscharmer Betrieb bereitgestellt werden, da beispielsweise ein schnelles Aufeinanderschlagen von Zahnradflanken des Getriebes 4 oder von Zahnflanken der Freiläufe vermieden werden kann.

Bei dem Verfahren 10 erfolgt zunächst ein Ermitteln 11 eines Eingriffszeitpunkts. Als Eingriffszeitpunkt wird dabei ein Zeitpunkt ermittelt, ab welchem ein Vortrieb des Elektrofahrrads 100 durch Einleitung eines Abtriebsmoments am Abtriebselement 107 erfolgt. Alternativ oder zusätzlich bevorzugt wird als Eingriffszeitpunkt ein Zeitpunkt ermittelt, ab welchem ein Momentenaufbau im mechanischen Übertragungspfad 50 des Elektrofahrrads 100 durch die Einleitung des Abtriebsmoments am Abtriebselement 107 erfolgt.

Das Ermitteln 11 des Eingriffszeitpunkts erfolgt dabei prädiktiv. Das heißt, es wird abgeschätzt, wann zukünftig der Vortrieb des Elektrofahrrads 100 und/oder der Momentenaufbau im Antriebsstrang des Elektrofahrrads 100 durch das Abtriebsmoment am Abtriebselement 107 erfolgt.

Besonders bevorzugt wird dabei als der Eingriffszeitpunkt ein Zeitpunkt ermittelt, ab welchem der Vortrieb des Elektrofahrrads 100 zumindest teilweise durch ein prognostiziertes am Kurbeltrieb 104 aufgebrachtes Tretmoment des Fahrers des Elektrofahrrads 100 erfolgt. Das heißt, es wird abgeschätzt, ab wann ein Kraftschluss der Pedalbetätigung am Kurbeltrieb 104 mit dem Antriebsstrang erfolgt.

Vorteilhafterweise erfolgt dabei bei dem Verfahren 10 zusätzlich ein Ermitteln 15 einer zukünftigen prognostizierten Trittfrequenz. Der Eingriffszeitpunkt wird dabei als ein Zeitpunkt ermittelt, bei welchem die prognostizierte Trittfrequenz eine vorbestimmte Eingriffstrittfrequenz erreicht oder übersteigt.

Die vorbestimmte Eingriffstrittfrequenz kann dabei basierend auf einer erfassten Hinterraddrehzahl des Hinterrads 110 und einem ermittelten Übersetzungsverhältnis ermittelt bzw. angepasst werden. Das heißt, anhand dem momentanen Übersetzungsverhältnis und den Drehzahlen am Kurbeltrieb 104 und am Hinterrad 110 kann die Eingriffsdrehzahl des Kurbeltriebs 104 ermittelt werden, ab welcher der Kraftschluss erfolgt.

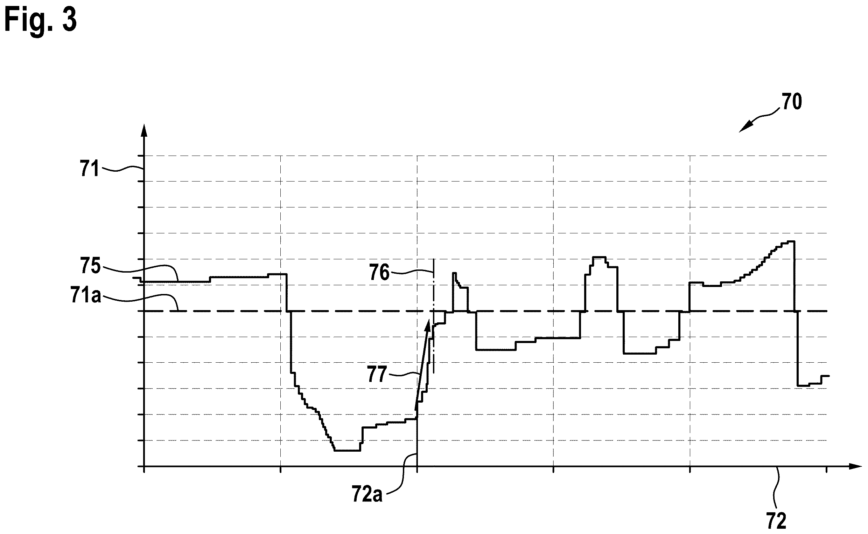

Das Ermitteln 15 der zukünftigen prognostizierten Trittfrequenz erfolgt dabei vorzugsweise basierend auf einer zeitlichen Überwachung der momentanen Trittfrequenz, wie beispielhaft in der Figur 3 dargestellt. Figur 3 zeigt dabei ein vereinfachtes schematisches Diagramm 70, welches einen Trittfrequenzverlauf 75 einer Trittfrequenz 71 über der Zeit 72 darstellt. Die Eingriffstrittfrequenz 71a ist dabei beispielhaft gestrichelt dargestellt. Beispielsweise kann die Eingriffstrittfrequenz 71a gleich Null betragen.

Ferner dargestellt ist im Diagramm 70 der Figur 3 beispielhaft ein Gradient 77 des momentanen Trittfrequenzverlaufs 75. Anhand des Gradienten 77 kann beispielweise zum Zeitpunkt 72a, unter der Annahme, dass die Trittfrequenz 71 im Wesentlichen gleich weitersteigen wird, abgeschätzt werden, dass zum Zeitpunkt 76 der prognostizierte Eingriffszeitpunkt erreicht wird, an dem der Kraftschluss des Fahrers mit dem Antriebsstrang erfolgt.

Ferner wird bevorzugt bei dem Verfahren 10 ein Ermitteln einer Eingriffs-Motordrehzahl beim Eingriffszeitpunkt durchgeführt. Die Eingriffs-Motordrehzahl wird insbesondere basierend auf der erfassten Hinterraddrehzahl und dem ermittelten Übersetzungsverhältnis ermittelt. Die Eingriffs-Motordrehzahl entspricht somit einer Drehzahl, mit welcher der Motor 2 drehen kann, bis der Eingriff bei den momentanen Betriebszuständen des Antriebsstrangs stattfindet.

Bei dem Verfahren 10 erfolgt dabei zum mechanischen Vorspannen des Übertragungspfads 50 ein gesteuertes Erzeugen 12 eines Vorspannmoments mittels der Antriebseinheit zeitlich vor dem ermittelten prognostizierten Eingriffszeitpunkt.

Das gesteuerte Erzeugen 12 des Vorspannmoments erfolgt dabei derart, dass die Antriebseinheit 1, insbesondere der Motor 2, mit einer Vorspanndrehzahl gedreht wird, welche größer oder gleich der Eingriffs-Drehzahl ist.

Bevorzugt wird das gesteuerte Erzeugen 12 des Vorspannmoments dabei maximal für eine vorbestimmte Zeitspanne durchgeführt. Weiterhin wird bei dem Erzeugen 12 des Vorspannmoments maximal ein vorbestimmtes Motormoment und/oder ein vorbestimmtes Lastmoment durch die Antriebseinheit 1 erzeugt. Dadurch kann ermöglicht werden, dass das Vorspannen des Antriebsstrangs kein signifikantes Antriebsdrehmoment am Hinterrad 110 bewirkt, welches einen Vortrieb oder eine Beschleunigung des Elektrofahrrads 100 bewirkt.

Bevorzugt wird das Verfahren in vorbestimmten Fahrsituationen durchgeführt, welche beispielsweise sensorbasiert erkannt werden können und/oder gezielt durch die Steuereinheit 20 herbeigeführt werden können.

Bevorzugt umfassen die Fahrsituationen einen Wiederantritt während einer Fortbewegung des Elektrofahrrads 100 und ein Pedaltippeln, bei welchem der Fahrer die Pedale des Kurbeltriebs 104 periodisch um einen kleinen Pedalwinkel vor und zurück bewegt.

Weiterhin kann das Verfahren 10 nach folgenden vorbestimmten erkannten Fahrsituationen durchgeführt werden: Pedalbetrieb, Kurvenfahrt, Sprung, Verzögerung des Elektrofahrrads, Steigungsfahrt, Schaltvorgang. Damit kann in vielfältigen Situationen ein gespannter Antriebsstrang bereitgestellt werden, wodurch ein direkter und reaktionsfreudiger Antritt durch den Fahrer und/oder ein motorunterstützter Vortrieb des Elektrofahrrads 100 bewirkt werden kann.

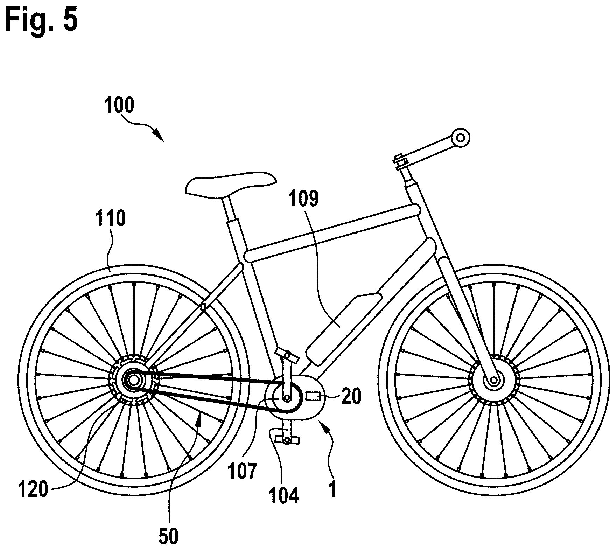

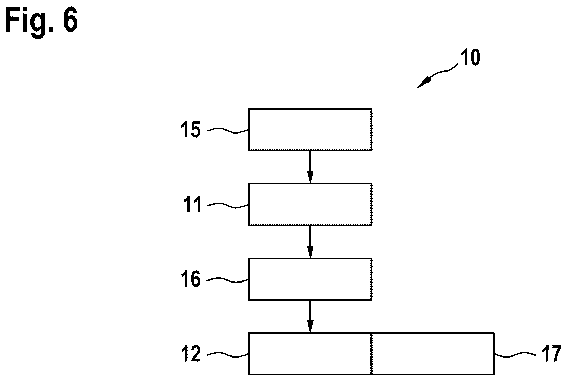

Figur 5 zeigt eine vereinfachte schematische Ansicht eines Elektrofahrrads 100, bei dem ein Verfahren 10 gemäß einem zweiten Ausführungsbeispiel der Erfindung durchgeführt wird. Eine stark vereinfachte schematische Ansicht des Verfahren 10 des zweiten Ausführungsbeispiels ist in Figur 6 dargestellt. Das Elektrofahrrad 100 der Figur 5 und das Verfahren 10 des zweiten Ausführungsbeispiels entsprechen im Wesentlichen dem Elektrofahrrad 100 und dem Verfahren 10 des ersten Ausführungsbeispiels, mit dem Unterschied, dass zusätzlich ein gesteuertes Erzeugen 17 eines Bremsmoments an dem Hinterrad 110 des Elektrofahrrads 100 erfolgt.

Das gesteuerte Erzeugen 17 des Bremsmoments an dem Hinterrad 110 erfolgt dabei analog zum gesteuerten Erzeugen 12 des Vorspannmoments vor dem Eingriffszeitpunkt, bevorzugt gleichzeitig.

Im zweiten Ausführungsbeispiel der Figuren 5 und 6 erfolgt das gesteuerte Erzeugen 17 des Bremsmoments mittels einer Bremse 120 am Hinterrad 110. Die Bremse 120 wird dabei bevorzugt von der Steuereinheit 20 gesteuert betätigt. Beispielsweise kann die Bremse 120 Teil eines Antiblockiersystems sein.

Durch das gesteuerte Erzeugen 17 des zusätzlichen Bremsmoments kann ein stärkeres Vorspannen mittels des Vorspannmoments der Antriebseinheit 1 erfolgen. Das heißt, es kann ein höheres Motormoment beim Vorspannen gestellt werden im Vergleich zum Vorspannen ohne gezieltes Bremsmoment. Das zusätzliche Bremsmoment am Hinterrad 110 bewirkt dabei das trotz des höheren Vorspannmoments, dass kein unbeabsichtigter Vortrieb oder Beschleunigung des Elektrofahrrads 100 erfolgt.

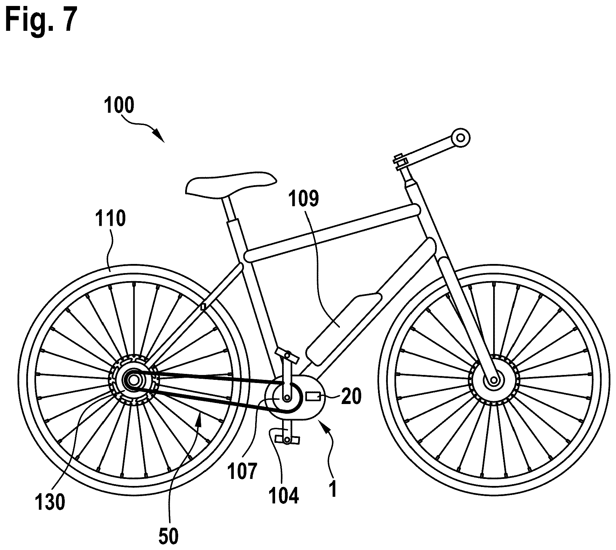

Figur 7 zeigt eine vereinfachte schematische Ansicht eines Elektrofahrrads 100, bei welchem ein Verfahren 10 gemäß einem dritten Ausführungsbeispiel der Erfindung durchgeführt wird. Das dritte Ausführungsbeispiel entspricht im Wesentlichen dem zweiten Ausführungsbeispiel der Figuren 5 und 6, mit dem Unterschied, dass das Bremsmoment am Hinterrad 110 mittels eines Nabenmotors 130 am Hinterrad 110 durchgeführt wird.

Der Nabenmotor 130 wird dabei zur Erzeugung des Bremsmoments, insbesondere während sich das Elektrofahrrad 100 fortbeweget, in einem generatorischen Betrieb betrieben. Dadurch kann beispielsweise zusätzlich Energie rückgewonnen und in den Energiespeicher 109 gespeist werden.

Zudem kann der Nabenmotor 130 bevorzugt zusätzlich in einem Vortriebsmodus, in welchem ein motorunterstützter Vortrieb des Elektrofahrrads 100 mittels der Antriebseinheit 1 erfolgt, ein zusätzliches Vortriebsmoment erzeugen, welches gemeinsam mit Tretmoment und Motormoment der Antriebseinheit 2 den Vortrieb des Elektrofahrrads 100 bewirkt.

## Patentansprüche

1. Verfahren zum Betreiben eines Elektrofahrrads (100), welches eine Antriebseinheit (1) und ein Abtriebselement (107) und ein Hinterrad (110) und einen mechanischen Übertragungspfad (50) zwischen Abtriebselement (107) und Hinterrad (110) aufweist, umfassend die Schritte:
- Ermitteln (11) eines Eingriffszeitpunkts, ab welchem ein Vortrieb des Elektrofahrrads (100) und/oder ein Momentenaufbau im Übertragungspfad (50) des Elektrofahrrads (100) durch die Einleitung eines Abtriebsmoments am Abtriebselement (107) erfolgt, und
- gesteuertes Erzeugen (12) eines Vorspannmoments mittels der Antriebseinheit (1) vor dem Eingriffszeitpunkt, zum mechanischen Vorspannen des Übertragungspfads (50).

2. Verfahren nach Anspruch 1,
- wobei das Elektrofahrrad (100) einen Kurbeltrieb (104) umfasst, welcher mit dem Abtriebselement (107), insbesondere über einen Fahrerfreilauf (108), drehmomentübertragend verbindbar ist, und
- wobei als der Eingriffszeitpunkt ein Zeitpunkt ermittelt wird, ab welchem der Vortrieb des Elektrofahrrads (100) zumindest teilweise durch ein prognostiziertes am Kurbeltrieb (104) aufgebrachtes Tretmoment eines Fahrers des Elektrofahrrads (100) erfolgt.

3. Verfahren nach einem der vorhergehenden Ansprüche, wobei das Ermitteln (11) des Eingriffszeitpunkts basierend auf einer erfassten Trittfrequenz und/oder einer erfassten Trittfrequenzänderung und/oder einem erfassten Pedalwinkel und/oder einem ermittelten Übersetzungsverhältnis erfolgt.

4. Verfahren nach einem der vorhergehenden Ansprüche, ferner umfassend den Schritt:
- Ermitteln (15) einer zukünftigen prognostizierten Trittfrequenz,
- wobei als Eingriffszeitpunkt ein Zeitpunkt ermittelt wird, bei welchem die prognostizierte Trittfrequenz eine vorbestimmte Eingriffstrittfrequenz erreicht oder übersteigt.

5. Verfahren nach Anspruch 4, wobei die Eingriffstrittfrequenz basierend auf einer erfassten Hinterraddrehzahl und dem ermittelten Übersetzungsverhältnis ermittelt wird.

6. Verfahren nach einem der vorhergehenden Ansprüche, ferner umfassend den Schritt:
- Ermitteln (16) einer Eingriffs-Motordrehzahl beim Eingriffszeitpunkt, insbesondere basierend auf der erfassten Hinterraddrehzahl und dem ermittelten Übersetzungsverhältnis,
- wobei das gesteuerte Erzeugen (12) des Vorspannmoments durch ein Betreiben der Antriebseinheit (1) mit einer Vorspanndrehzahl erfolgt, welche größer oder gleich der Eingriffs-Motordrehzahl ist.

7. Verfahren nach einem der vorhergehenden Ansprüche,
- wobei die Antriebseinheit (1) einen Motor (2) und ein Getriebe (3) und einen Motorfreilauf (4) umfasst, wobei das Getriebe (3) und der Motorfreilauf (4) zwischen Motor (2) und Abtriebselement (107) angeordnet sind, und
- wobei das gesteuerte Erzeugen (12) des Vorspannmoments mittels der Antriebseinheit (1) derart erfolgt, um einen Motorübertragungspfad (50a) zwischen Motor (2) und Abtriebselement (107) mechanisch vorzuspannen.

8. Verfahren nach einem der vorhergehenden Ansprüche, wobei das gesteuerte Erzeugen (12) des Vorspannmoments derart erfolgt, dass eine Beschleunigung des Elektrofahrrads (100) und/oder eine Beschleunigung einer Hinterraddrehzahl kleiner als ein vorbestimmter Schwellwert, insbesondere gleich Null, ist.

9. Verfahren nach einem der vorhergehenden Ansprüche, wobei das gesteuerte Erzeugen (12) des Vorspannmoments maximal für eine vorbestimmte Zeitspanne erfolgt.

10. Verfahren nach einem der vorhergehenden Ansprüche, wobei beim gesteuerten Erzeugen (12) des Vorspannmoments durch die Antriebseinheit (1) maximal ein vorbestimmtes Motormoment und/oder ein vorbestimmtes Lastmoment erzeugt wird.

11. Verfahren nach einem der vorhergehenden Ansprüche,
- wobei das Verfahren (10) ausschließlich in vorbestimmten Fahrsituationen durchgeführt wird, insbesondere wobei die vorbestimmten Fahrsituationen einen Wiederantritt während einer Fortbewegung des Elektrofahrrads (100) und/oder ein Pedaltippeln umfassen, und/oder
- wobei das Verfahren (10) nach vorbestimmten Fahrsituationen durchgeführt wird, insbesondere wobei die vorbestimmten Fahrsituationen einen Pedalbetrieb und/oder eine Kurvenfahrt und/oder einen Sprung und/oder eine Verzögerung des Elektrofahrrads (100) und/oder eine Steigungsfahrt und/oder einen Schaltvorgang umfassen.

12. Verfahren nach einem der vorhergehenden Ansprüche, wobei gesteuerte Erzeugen (12) des Vorspannmoments mittels der Antriebseinheit (1) zumindest eine Vorspann-Zeitspanne vor dem Eingriffszeitpunkt beginnt.

13. Verfahren nach einem der vorhergehenden Ansprüche, ferner umfassend den Schritt:
- gesteuertes Erzeugen (17) eines Bremsmoments an dem Hinterrad (110), insbesondere vor dem Eingriffszeitpunkt, zum mechanischen Vorspannen des Übertragungspfads (50).

14. Verfahren nach Anspruch 13, wobei das gesteuerte Erzeugen (17) des Bremsmoments mittels einer Bremse (120) und/oder mittels eines Nabenmotors (130) am Hinterrad (110), insbesondere in einem generatorischen Betrieb, erfolgt.

15. Elektrofahrrad, umfassend: eine Antriebseinheit (1), ein Abtriebselement (107), ein Hinterrad (110), einen mechanischen Übertragungspfad (50) zwischen Abtriebselement (107) und Hinterrad (110), und eine Steuereinheit (20), wobei die Steuereinheit (20) eingerichtet ist zur Durchführung des Verfahrens (10) nach einem der vorhergehenden Ansprüche.
